(19) Europäisches Patentamt / European Patent Office / Office européen des brevets

(11) **EP 4 708 102 A1**

(12) **EUROPEAN PATENT APPLICATION**
published in accordance with Art. 153(4) EPC

(43) Date of publication:
11.03.2026 Bulletin 2026/11

(21) Application number: 24800019.2

(22) Date of filing: 28.02.2024

(51) International Patent Classification (IPC):
$G06F\ 21/62^{(2013.01)}$ $G06F\ 16/28^{(2019.01)}$
$G09C\ 1/00^{(2006.01)}$ $H04L\ 67/1097^{(2022.01)}$

(52) Cooperative Patent Classification (CPC):
G06F 16/28; G06F 21/60; G06F 21/62; G09C 1/00;
H04L 67/1097

(86) International application number:
PCT/JP2024/007381

(87) International publication number:
WO 2024/228288 (07.11.2024 Gazette 2024/45)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 01.05.2023 JP 2023075852

(71) Applicant: NTT DOCOMO BUSINESS, Inc.
Tokyo 100-8019 (JP)

(72) Inventors:
• TANAKA, Satoshi
  Tokyo 100-8019 (JP)
• SAKURAI, Yoichi
  Tokyo 100-8019 (JP)
• SAWADA, Masashi
  Tokyo 100-8019 (JP)
• YAMAGIWA, Ryuta
  Tokyo 105-6309 (JP)

(74) Representative: Hoffmann Eitle
Patent- und Rechtsanwälte PartmbB
Arabellastraße 30
81925 München (DE)

(54) **PROCESSING SYSTEM, PROCESSING METHOD, AND PROCESSING PROGRAM**

(57) A processing system includes: a client (10) that uploads data to be stored; and a secret sharing storage that stores pieces of fragment data obtained by dividing the uploaded data in a distributed manner across a plurality of storage servers (30-1), (30-2), and (30-3), in which the secret sharing storage includes: a distribution server (20) that encrypts the uploaded data and then divides the uploaded data into a plurality of the pieces of fragment data, generates a plurality of pieces of parity data for ensuring redundancy, and stores the pieces of fragment data and the pieces of parity data in a distributed manner across the plurality of storage servers (30-1), (30-2), and (30-3), and only storage servers (30-2) and (30-3) as many as the number of pieces of fragment data and/or the number of pieces of parity data necessary for data restoration among all the storage servers (30-1), (30-2), and (30-3) perform generation backup of the stored fragment data or the stored parity data.

FIG.4

## EP 4 708 102 A1

**Description**

[Technical Field]

The present invention relates to a processing system, a processing method, and a processing program.

[Background Art]

In the case of handling personal information and important information, secure data storage is required. Data concealment by encryption using shared key encryption and public key encryption is one of secure data storage methods, but there is a possibility that data is restored in the future in a case where a ciphertext is stolen from a server. Therefore, there has been proposed a technology called secret sharing in which even if one server is attacked, data cannot be restored from the stolen ciphertext alone.

[Citation List]

[Patent Citation]

Patent Literature 1: JP 2013-140310 A

[Non Patent Literature]

Non Patent Literature 1: Dai Igarashi, Kota Tsuyuzaki, Yuto Kawahara, "SHSS: Super High-speed Secret Sharing Library for Object Storage Systems", Research Report, Security Psychology and Trust (SPT), 2015-SPT-14, vol 26, pp.1-8, [online], [Searched on February 22, 2023], Internet<URL:https://ipsj.ixsq.nii.ac.jp/ej/?action=pages_view_main &active_action=repository_view_main_item_detail&item_id=142 625&item_no=1&page_id=13&block_id=8>
Non Patent Literature 2: Adi Shamir, How to share a secret, Communications of the ACM, vol. 22, issue 11, pp.612-613, Nov., 1979, [online], [Searched on February 22, 2023], Internet<URL:https://dl.acm.org/doi/abs/10.1145/359168.359176>

[Summary of Invention]

[Technical Problem]

The secret sharing is a technology in which input data is fragmented into pieces of fragment data (for example, referred to as shares), and the pieces of fragment data are stored in a distributed manner across different servers to perform encryption. Each piece of fragment data cannot be restored alone.

Here, in the secret sharing, the input data is divided into the pieces of fragment data, and parity data having the same size as the divided data is generated. A data size (total capacity) when stored in a secret sharing format is as follows.

(Total capacity) = (Fragment file size) $\times$ (Number of fragment files)

The number of fragment files is a number obtained by adding both the fragment data and the parity data. At this time, the fragment file size varies depending on the method.

When a computational method with the highest capacity efficiency is adopted in the secret sharing, the capacity efficiency is obtained as n/k based on the number k of fragments required for restoration and the total number n of fragment files. Since a minimum configuration of the computational method corresponds to a case where (k,n)= (2,3), the capacity efficiency is 1.5 times. Even with the computational method with the highest capacity efficiency, when each piece of fragment data is subjected to generation backup, a data capacity increases by 1.5 times for each generation.

The present invention has been made in view of the above, and an object of the present invention is to provide a processing system, a processing method, and a processing program that enable suppression of an increase in data capacity due to generation backup in data storage using secret sharing.

[Solution to Problem]

According to an aspect of the embodiments, a processing system includes: a client that uploads data to be stored; and a secret sharing storage that stores pieces of fragment data obtained by dividing the uploaded data in a distributed manner across a plurality of storage servers, wherein the secret sharing storage includes: a distribution server that encrypts the uploaded data and then divides the uploaded data into a plurality of the pieces of fragment data, generates a plurality of pieces of parity data for ensuring redundancy, and stores the pieces of fragment data and the pieces of parity data in a distributed manner across the plurality of storage servers, and only storage servers as many as the number of pieces of fragment data and/or the number of pieces of parity data necessary for data restoration among all the storage servers perform generation backup of the stored fragment data or the stored parity data.

[Advantageous Effects of Invention]

According to the present invention, it is possible to suppress an increase in data capacity due to generation backup in data storage using secret sharing.

[Brief Description of Drawings] (BRIEF DESCRIPTION OF DRAWINGS)

FIG. 1 is a diagram illustrating an outline of distributed storage in a general secret sharing storage.
FIG. 2 is a block diagram illustrating an example of a configuration of a processing system according to an embodiment.
FIG. 3 is a diagram for describing an outline of processing of the embodiment.
FIG. 4 is a diagram for describing an outline of the processing of the embodiment.
FIG. 5 is a sequence diagram illustrating an example of a processing procedure of a processing method according to the embodiment.
FIG. 6 is a diagram illustrating a computer that executes a program.

Description of Embodiments

Hereinafter, embodiments of a processing system, a processing method, and a processing program according to the present application will be described in detail with reference to the drawings. Note that the processing system, the processing method, and the processing program according to the present application are not limited by the embodiments.
In the following embodiments, the processing system, the processing method, and a processing flow of the processing program according to the embodiments will be sequentially described, and finally, effects of the embodiments will be described.

[Embodiment]

First, an embodiment will be described. In the embodiment, a case where data to be stored is stored in a distributed manner across a plurality of storage servers will be described as an example.
In the embodiment, after encrypting upload data, a distribution server divides the upload data into a plurality of pieces of fragment data (for example, referred to as shares) and generates parity data for ensuring redundancy. Although original data cannot be restored with one share (fragment data) and one piece of parity data, the original data can be restored by collecting a number of pieces of fragment data and parity data necessary for the restoration. The original data can be restored by only the fragment data, only the parity data, or any of the fragment data and the parity data as long as the data can be collected as many as necessary for the restoration.
The distribution server stores each piece of fragment data and each piece of parity data in a distributed manner across the plurality of storage servers in each base. Then, in the embodiment, generation backup is not performed in all the storage servers, but only storage servers as many as the number of pieces of fragment data and/or parity data necessary for data restoration among all the storage servers perform the generation backup for the stored fragment data or parity data, thereby suppressing an increase in data capacity due to the generation backup.
Hereinafter, an example applied to computational secret sharing will be described as secret sharing. The embodiment can be applied to any technology such as threshold secret sharing of Shamir, additive secret sharing, lamp secret sharing (of Shamir), or the like, in which data cannot be restored with one share (fragment data or parity data), but data can be restored by collecting a necessary number of pieces of fragment data and/or parity data.

[Description of Outline of Distributed Storage]

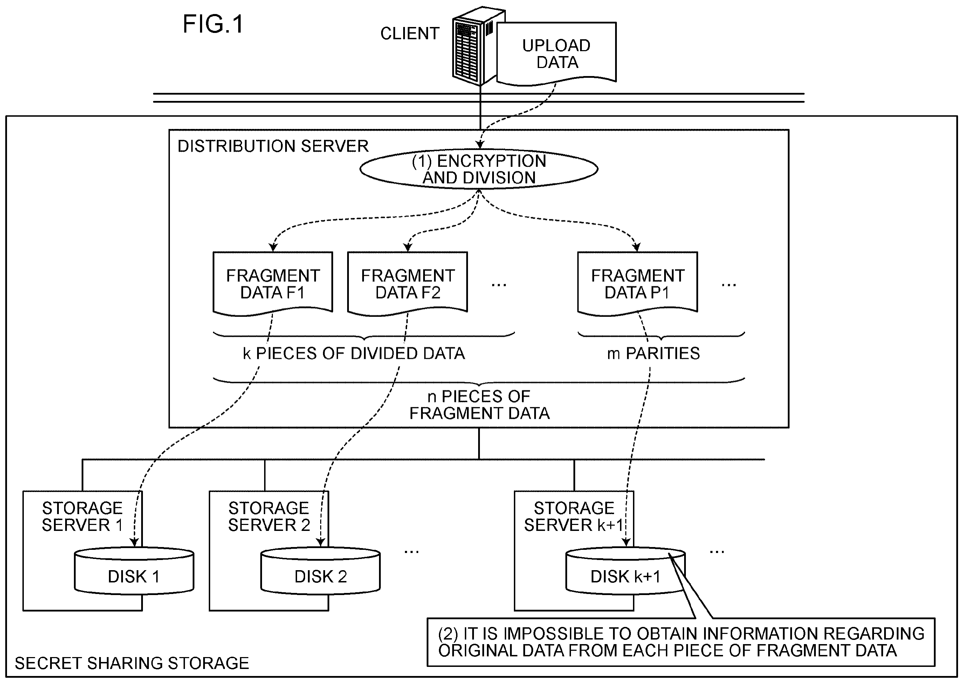

Next, an outline of distributed storage in a general secret sharing storage will be described with reference to FIG. 1. FIG. 1 is a diagram illustrating an outline of the distributed storage in the general secret sharing storage.

First, when upload data is uploaded from a client to the secret sharing storage, the distribution server encrypts the upload data and divides the upload data into pieces of fragment data ((1) in FIG. 1).

The distribution server divides the encrypted upload data into k pieces of fragment data F1, F2, ···, and Fk, and generates m pieces of parity data P1, ···, and Pm (fragment data) having the same size as the pieces of fragment data F1, F2, ···, and Fk. At this time, it is not necessary to distinguish the fragment data from the parity data. Then, if there are any k pieces of data, the data can be restored.

Then, the distribution server stores the pieces of fragment data F1, F2, ···, and Fk and the pieces of parity data P1, ···, and Pm in a distributed manner across disks 1, 2, k+1, and the like of different storage servers 1, ···, k+1, and the like, respectively. Hereinafter, the fragment data and the parity data are not distinguished from each other and will be described as the share.

It is impossible to obtain information regarding the original data from each share alone ((2) in FIG. 1). However, if there are k shares among k pieces of fragment data F1, F2, ···, and Fk and m pieces of parity data P1, ···, and Pm, the information regarding the original data can be obtained. That is, if there are k shares, the original data can be restored.

Therefore, in the embodiment, only k storage servers as many as the number k of pieces of divided data perform generation backup of the stored shares. In this case, an increase in data capacity due to the generation backup can be suppressed as compared with a case where all the storage servers perform the generation backup.

[Configuration of Processing System]

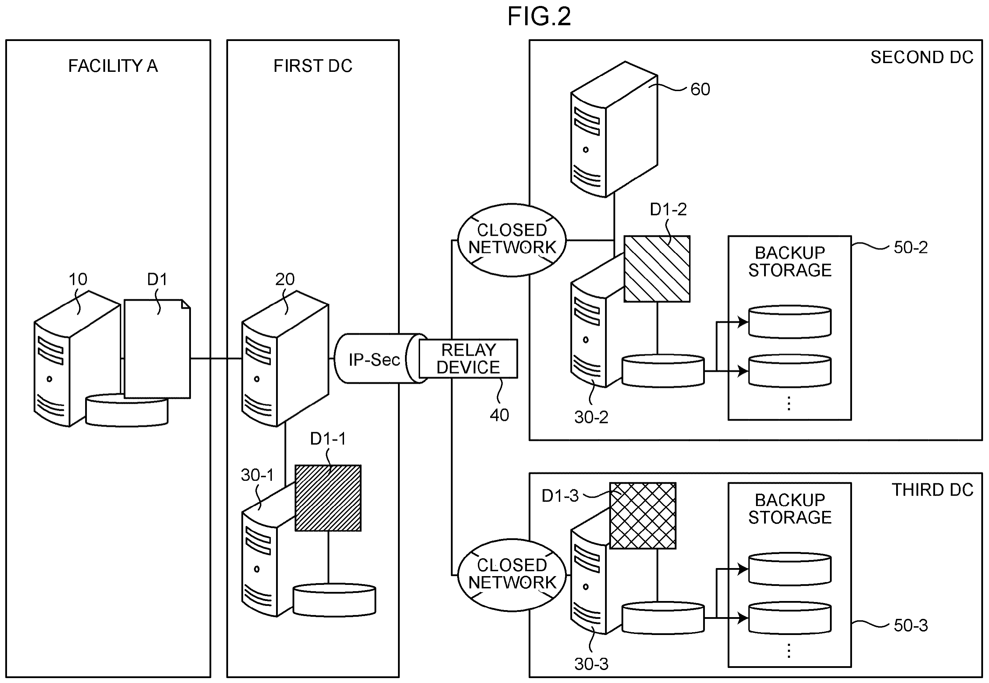

Next, a configuration of a processing system according to the embodiment will be described. FIG. 2 is a block diagram illustrating an example of the configuration of the processing system according to the embodiment. In FIG. 2 and subsequent figures, an example in a case where (k,n) = (2,3), which is a minimum configuration of a computational secret sharing method, that is, an example in which the uploaded data is divided into two pieces of fragment data, one piece of parity data is generated, and the pieces of fragment data and the parity data are respectively stored in a distributed manner across three storage servers will be described.

For example, as illustrated in FIG. 2, the processing system according to the embodiment includes a client 10 that uploads data to be stored and a secret sharing storage. The secret sharing storage includes a distribution server that stores pieces of fragment data obtained by dividing the uploaded data in a distributed manner across a plurality of storage servers, and the plurality of storage servers.

In the example of FIG. 2, a configuration in which the client 10 is provided in a facility A, and storage servers 30-1 to 30-3 are provided in a first data center (DC), a second DC, and a third DC, respectively, is described as an example, the client 10 being capable of data communication with the first to third DCs via a relay device 40. The configuration illustrated in FIG. 2 is merely an example, and a specific configuration and the number of devices are not particularly limited.

The client 10 acquires data D1 to be stored and uploads the acquired data D1 to be stored to a distribution server 20. For example, an operator of the client 10 selects the data to be uploaded through a web user interface (UI) screen for the processing system, which is deployed in a web browser, and uploads the data to be uploaded.

After encrypting the uploaded data D1, the distribution server 20 divides the uploaded data D1 into k pieces of fragment data, and generates m pieces of parity data having the same size as the pieces of divided fragment data.

In the example of FIG. 2, after encrypting the uploaded data D1, the distribution server 20 divides the uploaded data D1 into two pieces of fragment data, and generates one piece of parity data having the same size as the pieces of divided fragment data. The distribution server 20 stores two pieces of fragment data and one piece of parity data, that is, three shares D1-1 to D1-3, in a distributed manner across the plurality of storage servers 30-1 to 30-3.

Each share is meaningless data, and the original data D1 cannot be restored with only one share and information is not leaked. However, when a number of shares as many as or more than the number of pieces of divided data of the data D1 are obtained, the original data D1 can be restored. That is, when two of the three shares D1-1 to D1-3 are obtained, the original data D1 can be restored.

The storage server 30-2 is provided in the second DC, and the storage server 30-3 is provided in the third DC. The second DC and the third DC are connected to the facility A via the relay device 40 of the first DC. The second DC and the third DC are provided in a closed network. The second DC is provided with, for example, a distribution server 60.

Then, the storage server 30-1 stores the share D1-1. The storage server 30-2 stores the share D1-2. The storage server 30-3 stores the share D1-3.

In the embodiment, only k storage servers as many as the number of pieces of divided data among all the storage servers perform generation backup of the stored shares. In the example of FIG. 2, only two storage servers provided at two bases among the three storage servers 30-1 to 30-3 perform generation backup of the stored shares.

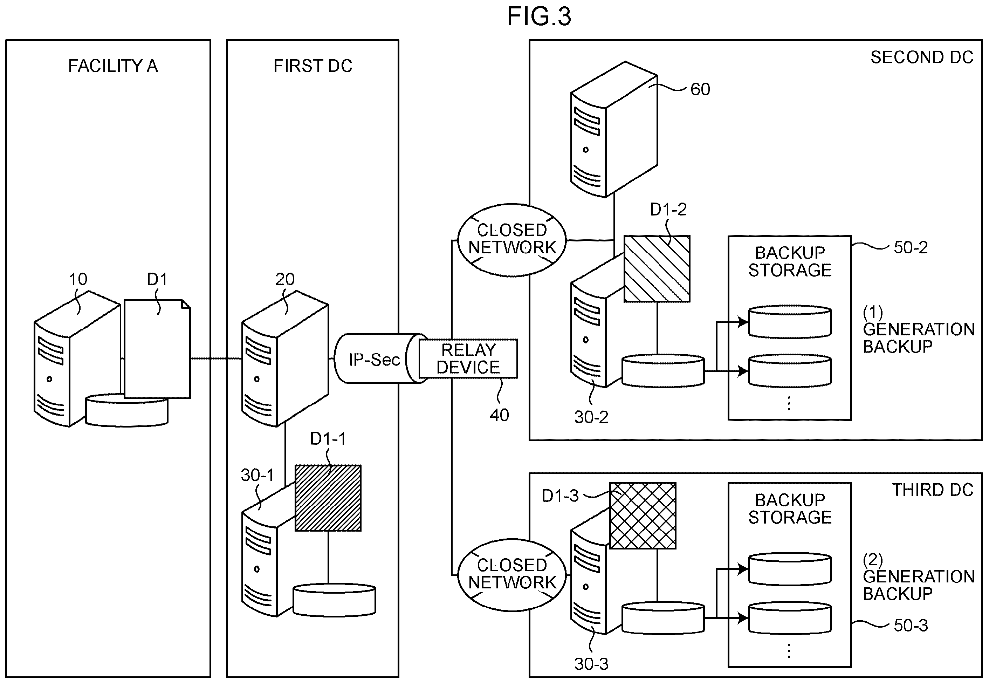

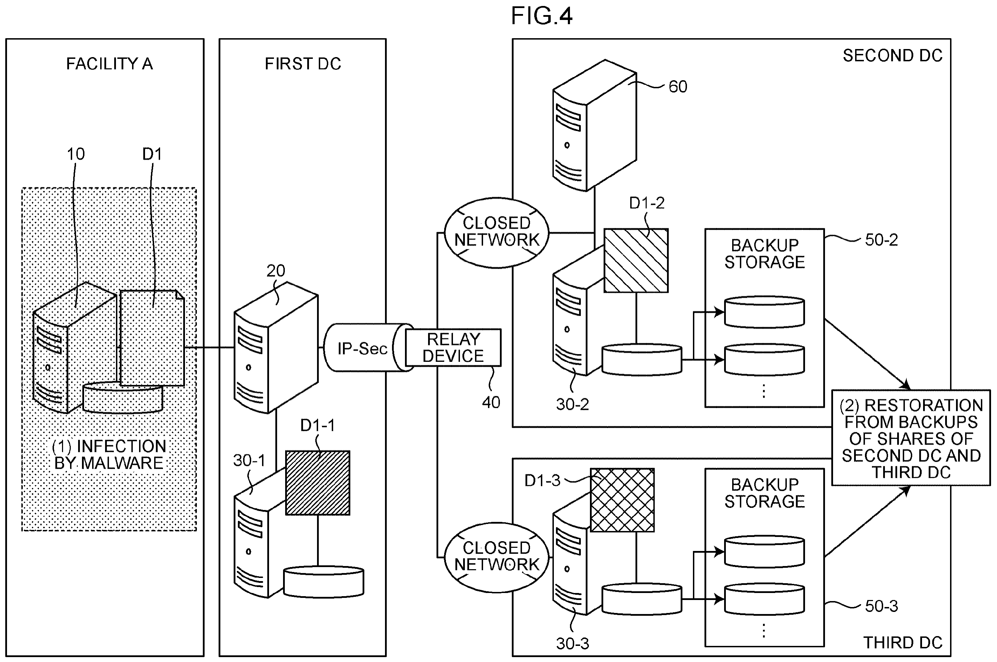

FIGS. 3 and 4 are diagrams illustrating an outline of processing of the embodiment. Specifically, as illustrated in FIG. 3, only the storage server 30-2 and the storage server 30-3 in the closed network perform generation backup of the stored shares D1-2 and D1-3 in backup storages 50-2 and 50-3 ((1) and (2) in FIG. 3).

The distribution server 20 divides the encrypted data D1 into two pieces of fragment data, generates one piece of parity data having the same size as the pieces of divided fragment data, and stores the pieces of data in a distributed manner across the storage servers 30-1 to 30-3. Therefore, the data capacity of the shares to be stored in a distributed manner is 1.5 times (0.5 times × 3) the data D1. When all the shares D1-1 to D1-3 are subjected to generation backup, a data capacity corresponding to 1.5 times the data capacity of the original data D1 × the number of generations for which a backup is acquired is required.

On the other hand, in the embodiment, targets of the generation backup are only the shares D1-2 and D1-3 stored in the storage server 30-2 and the storage server 30-3. Therefore, the data capacity of the targets of the generation backup is the same (0.5 times + 0.5 times) as the data capacity of the original data D1, and only increases by the number of generations for which a backup is acquired. Therefore, in the embodiment, capacity efficiency equivalent to that of generation backup according to the related art can be maintained. For example, in a case where generation backups for three generations are acquired, the data capacity remains three times the data capacity of the original data D1.

Then, as illustrated in FIG. 4, even in a case where the original data D1 is infected by malware ((1) in FIG. 4), the original data D1 can be restored from the backups of the shares D1-2 and D1-3 of the backup storages 50-2 and 50-3 ((2) in FIG. 4).

Since the second DC and the third DC are provided in the closed network, that is, a network physically and logically separated from the facility A, the shares D1-2 and D1-3 subjected to generation backup are not affected by malware infection. Therefore, the original data D1 can be appropriately restored from the backups of the shares D1-2 and D1-3 of the backup storages 50-2 and 50-3 of the second DC and the third DC of the closed network.

[Processing Procedure]

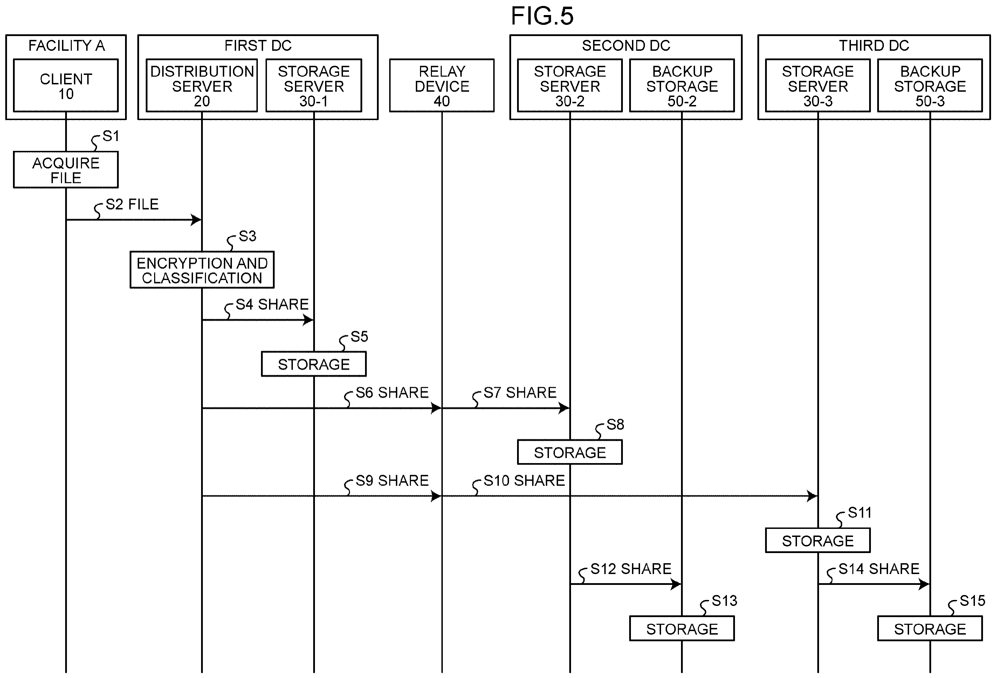

FIG. 5 is a sequence diagram illustrating an example of a processing procedure of a processing method according to the embodiment. As illustrated in FIG. 5, the client 10 acquires the data D1 to be stored (step S1). Then, the client 10 uploads the data D1 to the distribution server 20 (step S2).

The distribution server 20 encrypts the data D1, divides the data D1 into two pieces of fragment data, and generates one piece of parity data having the same size as the divided fragment data (step S3).

The distribution server 20 stores the share D1-1 in the storage server 30-1 (steps S4 and S5).

The distribution server 20 stores the share D1-2 in the storage server 30-2 via the relay device 40 (steps S6 to S8).

The distribution server 20 stores the share D1-3 in the storage server 30-3 via the relay device 40 (steps S9 to S11).

Then, the storage server 30-2 and the storage server 30-3 store the shares D1-2 and D1-3 in the backup storages 50-2 and 50-3 (steps S12 to S15), respectively, to perform generation backup.

[Effects of Embodiment]

As described above, in the embodiment, after encrypting uploaded data, the distribution server 20 divides the uploaded data into a plurality of pieces of fragment data, generates a plurality of pieces of parity data for ensuring redundancy, and stores the pieces of fragment data and the pieces of parity data in a distributed manner across a plurality of storage servers. Then, in the embodiment, among all the storage servers, only the same number of storage servers as the number of shares necessary for data restoration perform generation backup of the stored fragment data or parity data.

According to the related art, in the secret sharing, since data is stored in the form of ensuring redundancy, a data amount is larger than that of the original file, and the data amount is increased in proportion to a data capacity obtained by adding the data amount of the original file and the increased data amount and the number of generations for which a generation backup is acquired.

On the other hand, in the embodiment, not all the storage servers perform the generation backup, but only the same number of storage servers as the number of shares necessary for data restoration perform the generation backup. Therefore, according to the embodiment, by performing the generation backup only for a minimum number of shares necessary for the restoration, an increase in capacity due to the backup can be suppressed and the backup can be efficiently made as compared with the related art. In particular, in a case where (k,n) = (2,3), which corresponds to the minimum configuration of the computational secret sharing method, only the number of generations for which a backup is acquired increases. Therefore, in the embodiment, the capacity efficiency can be maintained as compared with the generation backup according to the related art, and an increase in data capacity due to the generation backup can be suppressed.

[System Configuration, Etc.]

In addition, each illustrated component of each device is functionally conceptual, and is not necessarily physically configured as illustrated in the drawings. That is, a specific form of distribution and integration of each device is not limited to the illustrated form, and all or a part thereof can be functionally or physically distributed and integrated in an arbitrary unit according to various loads, usage conditions, and the like. Furthermore, arbitrary some or all of the processing functions executed in the devices can be implemented by a central processing unit (CPU), a graphics processing unit (GPU), and a program analyzed and executed by the CPU or the GPU, or can be implemented as hardware by wired logic.

Among the steps of processing described in the present embodiment, some or all of the steps of processing described as being performed automatically can be performed manually, or some or all of the steps of processing described as being performed manually can be performed automatically by a known method. In addition, the processing procedure, the control procedure, the specific name, and the information including various types of data and parameters illustrated in the document and the drawings can be arbitrarily changed unless otherwise specified.

[Program]

In addition, it is also possible to create a program in which the steps of processing performed by the client 10 and the storage servers 30-1 to 30-3 described in the above embodiments are described in a language executable by a computer. For example, it is also possible to create a program in which the steps of processing performed by the client 10 and the storage servers 30-1 to 30-3 in the embodiments are described in a language executable by a computer. In this case, when the computer executes the program, the same effects as those of the above embodiments can be obtained. Further, the program may be recorded in a computer-readable recording medium, and the program recorded in the recording medium may be read and executed by the computer to implement processing similar to those in the above-described embodiments.

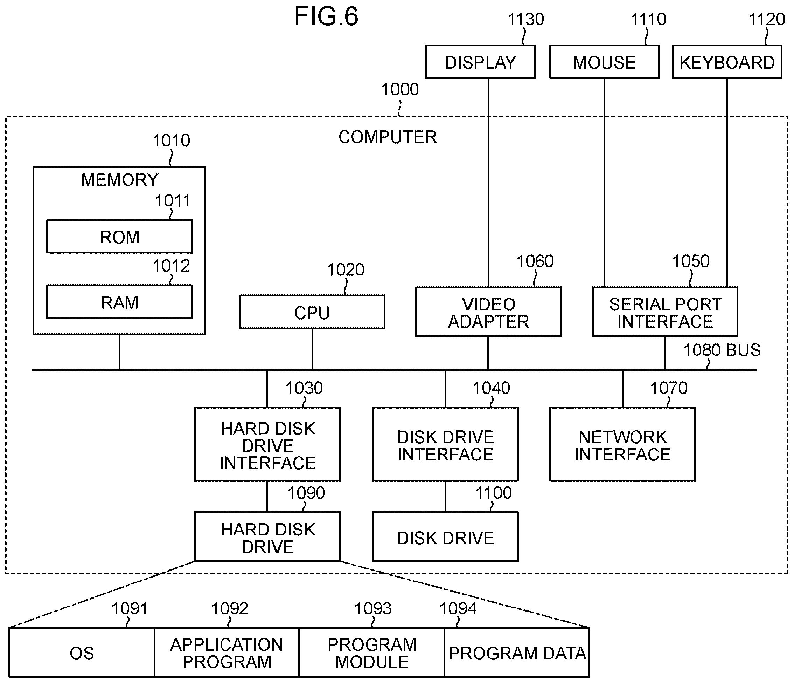

FIG. 6 is a diagram illustrating the computer that executes the program. As illustrated in FIG. 6, a computer 1000 includes, for example, a memory 1010, a CPU 1020, a hard disk drive interface 1030, a disk drive interface 1040, a serial port interface 1050, a video adapter 1060, and a network interface 1070, which are connected by a bus 1080.

As illustrated in FIG. 6, the memory 1010 includes a read only memory (ROM) 1011 and a random access memory (RAM) 1012. The ROM 1011 stores, for example, a boot program such as a basic input output system (BIOS). The hard disk drive interface 1030 is connected to a hard disk drive 1090 as illustrated in FIG. 6. The disk drive interface 1040 is connected to a disk drive 1100. For example, a removable storage medium such as a magnetic disk or an optical disk is inserted into the disk drive 1100. The serial port interface 1050 is connected to, for example, a mouse 1110 and a keyboard 1120. The video adapter 1060 is connected to, for example, a display 1130.

Here, as illustrated in FIG. 6, the hard disk drive 1090 stores, for example, an operating system (OS) 1091, an application program 1092, a program module 1093, and program data 1094. That is, the program described above is stored, for example, in the hard disk drive 1090 as the program module in which a command executed by the computer 1000 is described.

Further, various types of data described in the above embodiments are stored as the program data in, for example, the memory 1010 or the hard disk drive 1090. Then, the CPU 1020 reads the program module 1093 and the program data 1094 stored in the memory 1010 and the hard disk drive 1090 to the RAM 1012 as necessary, and performs various processing procedures.

The program module 1093 and the program data 1094 related to the program are not limited to being stored in the hard disk drive 1090, and may be stored in, for example, a removable storage medium and read by the CPU 1020 via a disk drive or the like. Alternatively, the program module 1093 and the program data 1094 related to the program may be stored in another computer connected via a network (local area network (LAN), wide area network (WAN), or the like) and read by the CPU 1020 via the network interface 1070.

The above-described embodiments and modifications thereof are included in the technology disclosed in the present application, and likewise fall within the scope of the invention described in the claims and equivalents thereof.

10 CLIENT

30-1 to 30-3 STORAGE SERVER
40 RELAY DEVICE
50-1 to 50-3 BACKUP STORAGE

**Claims**

**1.** A processing system comprising:

a client that uploads data to be stored; and
a secret sharing storage that stores pieces of fragment data obtained by dividing the uploaded data in a distributed manner across a plurality of storage servers, wherein
the secret sharing storage includes:

a distribution server that encrypts the uploaded data and then divides the uploaded data into a plurality of the pieces of fragment data, generates a plurality of pieces of parity data for ensuring redundancy, and stores the pieces of fragment data and the pieces of parity data in a distributed manner across the plurality of storage servers, and
only storage servers as many as the number of pieces of fragment data and/or the number of pieces of parity data necessary for data restoration among all the storage servers perform generation backup of the stored fragment data or the stored parity data.

2. The processing system according to claim 1, wherein

the distribution server encrypts the uploaded data and then divides the uploaded data into k pieces of fragment data, generates m pieces of parity-added data having the same size as the pieces of divided fragment data, and stores the pieces of fragment data and the pieces of parity data in a distributed manner across the plurality of storage servers, and
the data is restorable based on the k pieces of fragment data and/or the pieces of parity data.

3. The processing system according to claim 2, wherein

the distribution server encrypts the uploaded data and then divides the uploaded data into two pieces of fragment data, generates two pieces of parity data having the same size as the pieces of divided fragment data, and stores the pieces of fragment data and the pieces of parity data in a distributed manner across three storage servers provided in three bases, and
only two of the three storage servers provided at two bases perform generation backup of the stored fragment data or the stored parity data.

4. The processing system according to claim 1, wherein the same number of storage servers as the number of pieces of fragment data and/or the number of pieces of parity data necessary for restoration of the data are provided in a closed network.

5. A processing method executed by a processing system including a client that uploads data to be stored, and a secret sharing storage that includes a distribution server that stores pieces of fragment data obtained by dividing the uploaded data in a distributed manner across a plurality of storage servers, and the plurality of storage servers, the processing method comprising:

a process of encrypting, by the distribution server, the uploaded data and then dividing the uploaded data into a plurality of the pieces of fragment data, generating a plurality of pieces of parity data for ensuring redundancy, and storing the pieces of fragment data and the pieces of parity data in a distributed manner across the plurality of storage servers; and
a process of performing, by only storage servers as many as the number of pieces of fragment data and/or the number of pieces of parity data necessary for data restoration among all the storage servers, generation backup of the stored fragment data or the stored parity data.

6. A processing program for causing a computer to execute a method, wherein

the computer serving as a distribution server that stores pieces of fragment data obtained by dividing uploaded data in a distributed manner across a plurality of storage servers is caused to perform a step of encrypting the uploaded data and then dividing the uploaded data into a plurality of the pieces of fragment data, generating a plurality of pieces of parity data for ensuring redundancy, and storing the pieces of fragment data and the pieces of parity data in a distributed manner across the plurality of storage servers, and
the computer serving as storage servers as many as the number of pieces of fragment data and/or the number of pieces of parity data necessary for data restoration among all the storage servers is caused to perform a step of performing generation backup of the stored fragment data or the stored parity data.

**FIG.1**

CLIENT — UPLOAD DATA

DISTRIBUTION SERVER

(1) ENCRYPTION AND DIVISION

FRAGMENT DATA F1 — FRAGMENT DATA F2 ... FRAGMENT DATA P1 ...

k PIECES OF DIVIDED DATA — m PARITIES

n PIECES OF FRAGMENT DATA

STORAGE SERVER 1 — STORAGE SERVER 2 ... STORAGE SERVER k+1

DISK 1 — DISK 2 ... DISK k+1

(2) IT IS IMPOSSIBLE TO OBTAIN INFORMATION REGARDING ORIGINAL DATA FROM EACH PIECE OF FRAGMENT DATA

SECRET SHARING STORAGE

# FIG.2

FACILITY A

FIRST DC

SECOND DC

THIRD DC

EP 4 708 102 A1

# FIG.3

FIG.4

FACILITY A

FIRST DC

SECOND DC

10  D1

20

60

(1) INFECTION BY MALWARE

30-1

D1-1

IP-Sec

RELAY DEVICE

40

CLOSED NETWORK

D1-2

30-2

BACKUP STORAGE

50-2

(2) RESTORATION FROM BACKUPS OF SHARES OF SECOND DC AND THIRD DC

CLOSED NETWORK

D1-3

30-3

BACKUP STORAGE

50-3

THIRD DC

# FIG.5

EP 4 708 102 A1

# FIG.6

## INTERNATIONAL SEARCH REPORT

International application No.

**PCT/JP2024/007381**

### A. CLASSIFICATION OF SUBJECT MATTER

*G06F 21/62*(2013.01)i; *G06F 16/28*(2019.01)i; *G09C 1/00*(2006.01)i; *H04L 67/1097*(2022.01)i
FI:   G06F21/62 318; H04L67/1097; G06F16/28; G09C1/00 660D

According to International Patent Classification (IPC) or to both national classification and IPC

### B. FIELDS SEARCHED

Minimum documentation searched (classification system followed by classification symbols)

G06F21/62; G06F16/28; G09C1/00; H04L67/1097

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | 手塚伸. クラウドファイルバックアップシステムにおける複数ポリシに基づいた削除保証手法. 情報処理学会論文誌. 15 June 2013, (Transactions of the Information Processing Society of Japan), non-official translation (TEZUKA, Shin. Deletion Guarantee Method Based on Multiple Policies in Cloud File Backup System.)<br>in particular, "4. Control Key Generation Method Based on Chain Key and Multiple Policies" | 1-6 |
| A | 五十嵐大,他. SHSS:オブジェクトストレージ向けの超高速秘密分散ライブラリ. 情報処理学会研究報告. 25 June 2015, (IKARASHI, Dai et al. SHSS: "Super High-speed (or, Sugoku Hayai) Secret Sharing" Library for Object Storage Systems. IPSJ SIG Technical Report.)<br>in particular, "1.2. Erasure Coding" | 1-6 |
| A | US 2005/0021869 A1 (AULTMAN, Joseph L.) 27 January 2005 (2005-01-27) | 1-6 |

☐ Further documents are listed in the continuation of Box C.      ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **19 April 2024** | **07 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
**Information on patent family members**

International application No.

**PCT/JP2024/007381**

| Patent document<br>cited in search report | Publication date<br>(day/month/year) | Patent family member(s) | Publication date<br>(day/month/year) |
|---|---|---|---|
| US 2005/0021869 A1 | 27 January 2005 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013140310 A

**Non-patent literature cited in the description**

- **DAI IGARASHI** ; **KOTA TSUYUZAKI** ; **YUTO KAWAHARA**. SHSS: Super High-speed Secret Sharing Library for Object Storage Systems. *Research Report, Security Psychology and Trust (SPT), 2015-SPT-14*, 22 February 2023, vol. 26, 1-8, https://ipsj.ixsq.nii.ac.jp/ej/?action=pages_view_-main &active_action=repository_view_main_item_-detail&item_id=142 625&item_no=1&page_id=13&-block_id=8>

- **ADI SHAMIR**. How to share a secret. *Communications of the ACM*, 22 February 2023, vol. 22 (11), 612-613, https://dl.acm.org/-doi/abs/10.1145/359168.359176